# EUROPÄISCHE PATENTSCHRIFT

(11) **EP 1 222 851 B1**
(45) Veröffentlichungstag und Bekanntmachung des Hinweises auf die Patenterteilung: **10.05.2006**
(21) Anmeldenummer: 01200105.3
(22) Anmeldetag: 12.01.2001
(51) Int. Cl.: A01F 15/07, B65B 11/04

(54) **Ballenwickelgerät**
A bale wrapping machine
Machine à emballer les balles

(43) Veröffentlichungstag der Anmeldung: 17.07.2002
(73) Patentinhaber: Lely Enterprises AG, 6300 ZUG (CH)
(72) Erfinder: Ehrenpfort, Uwe Wiechart, 38304 Wolfenbüttel (DE); Martensen, Klaus, 38304 Wolfenbüttel (DE)
(74) Vertreter: Corten, Maurice Jean F.M.

(56) Entgegenhaltungen:
- WO-A-98/26648
- WO-A-99/42367
- DE-U- 9 414 220
- GB-A- 2 193 683

## Beschreibung

Die Erfindung betrifft ein Ballenwickelgerät, bestehend aus einem Wickeltisch, auf welchem ein Ballen um eine horizontale Achse drehbar ist und einem Tragrahmen welcher wenigstens einen um eine vertikale Achse mittels eines Drehantriebes drehbaren Dreharm trägt, wobei der Drehantrieb zwischen Oberseite des Tragrahmens und Unterseite des Dreharmes angeordnet ist und einen im Tragrahmen angeordneten Drehmotor aufweist, dessen Abtriebswelle mit dem Dreharm verbunden ist.

Bei einer durch die WO 98 / 26648A vorbekannten Ausführungsform ist die Antriebseinheit für den Dreharm in dem den Dreharm tragenden Tragrahmen angeordnet. Die Antriebswelle der Antriebseinheit ist drehfest mit dem Dreharm verbunden.

Um die Stretchwalzen für den Film in Abhängigkeit von der Drehzahl des Dreharmes anzutreiben, sind im Dreharm mechanische Übertragungsteile wie Welle und Getriebe angeordnet, deren Antriebsmittel mit der Antriebseinheit für den Dreharm verbunden sind.

Bei einem in einem Prospekt der Firma Maschinenfabrik Bernhard Krone GmbH "Combi Pack" mit dem Druckvermerk Nie 985/3/99 dargestellten Ballenwickelgerät ist das Getriebe als Stirnradgetriebe ausgebildet und in Höhe des Tragrahmens für den Dreharm an dem Tragrahmen befestigt, siehe auch DE 197 55 605 C1. Darüber sind Lamellenbremse und Hydromotor angeordnet.

Eine weitere Ausführungsform geht aus einem Prospekt der Firma Claas Vertriebsgesellschaft "Rundballenpressen-Wickler-Kombination Rollant 250 RC Uniwrap" mit dem Druckvermerk 08/00 (Gie) deutsch 200/1114 hervor. Dabei ist an einer Rahmenbaugruppe eine Nabe zur Lagerung des Dreharmes befestigt und oberhalb der Rahmenbaugruppe ein Wickeltrieb mit liegendem Hydromotor angeordnet.

Darüber hinaus gibt es Dreharmantriebe, die anstelle eines Getriebes einen Kettentrieb aufweisen.

Der Erfindung liegt die Aufgabe zugrunde, einen raumsparenden, kompakten Drehantrieb für den Dreharm zu schaffen.

Ausgehend von der eingangs beschriebenen Vorrichtung wird diese Aufgabe erfindungsgemäß dadurch gelöst, dass dem Drehmotor ein im Dreharm angeordnetes ein- oder mehrstufiges Planetengetriebe nachgeschaltet ist, bestehend aus einem direkt oder indirekt mit der Abtriebswelle des Drehmotors drehfest verbunden, eingangsseitigen Sonnenrad, einem oder mehreren in einem Steg gelagerten Planetenrädern und einem Hohlrad. Hinsichtlich der weiteren Ausgestaltung der Erfindung wird auf die Unteransprüche verwiesen.

Gemäß der Erfindung ergeben sich folgende Vorteile:
- trotz Drehmotor und Getriebe nur eine kompakte Baueinheit als Antrieb
- die Kompaktheit eines Planetengetriebes erlaubt größere Untersetzungen und damit Hydromotore mit kleinerem Schluckvermögen
- aufgrund der größeren Untersetzung ist die Selbsthemmung des Getriebes im Stillstand relativ größer, so dass die üblicherweise bisher notwendigen Lasthalteventile entfallen.
- Modulbauweise
- logistikfreundlich
- Lamellenbremse ist ebenfalls integrierbar
- wartungsfrei, da Leckölschmierung
- geringeres Gewicht
- einfache Verkleidung möglich, da symmetrisches Design oben und unten

Im folgenden wird die Erfindung anhand von Ausführungsbeispielen näher erläutert. Es zeigen:
Fig. 1 eine Seitenansicht eines Ballenwickelgerätes bekannter Bauart,
Fig. 2eine Seitenansicht gemäß Fig. 1 auf ein Ballenwickelgerät mit einem erfindungsgemäßen Antrieb des Dreharmes der Wickelvorrichtung,
Fig. 3 eine schematische Darstellung eines ersten Ausführungsbeispieles eines Dreharmantriebes,
Fig. 4 eine schematische Darstellung eines zweiten Ausführungsbeispieles eines Dreharmantriebes,
Fig. 5 in vergrößerter Darstellung eine Ansicht auf den Dreharmantrieb gemäß Fig. 2 und 3 bei teilweise weggelassenem Dreharm und Tragrahmen,
Fig. 6 eine Ansicht zu der Fig. 5 in Blickrichtung des Pfeiles X.

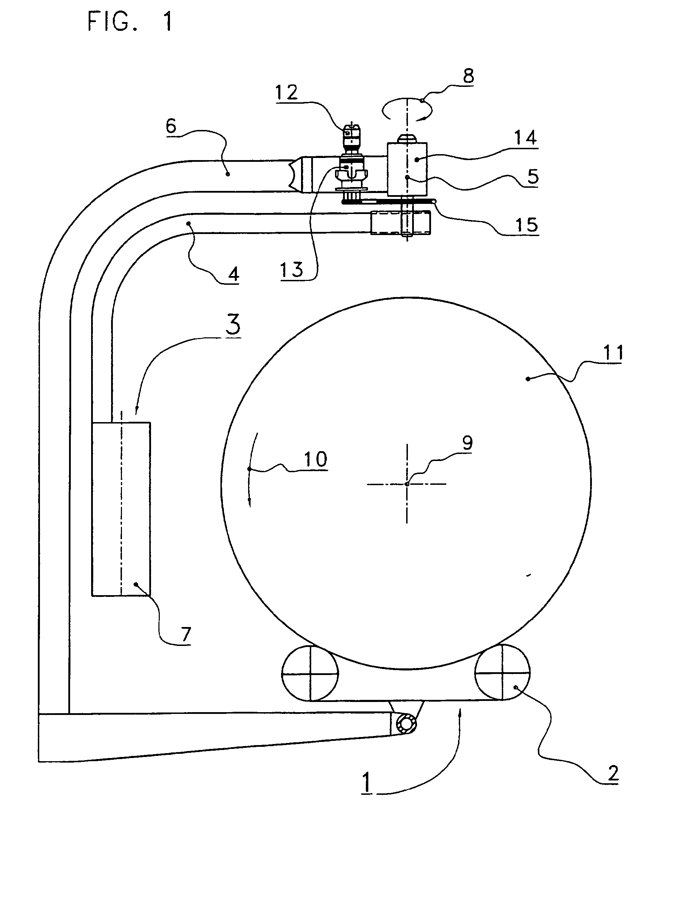

Die Fig. 1 zeigt ein Ballenwickelgerät bekannter Bauart zum Umhüllen eines Erntegutballens mit Folie. Das Ballenwickelgerät besteht im wesentlichen aus einem feststehenden Wickeltisch 1 mit antreibbaren Förderelementen 2 und einer Wickelvorrichtung 3 mit einem Dreharm 4, der um eine vertikale Drehachse 5 drehbar in einem Tragrahmen 6 gelagert ist und am unteren Ende eine Folienrolle 7 sowie eine nicht dargestellte Stretcheinheit trägt.

Während des Umhüllungsvorganges wird die Folienrolle 7 in einer Drehbewegung mit einer Drehrichtung 8 um die vertikale Achse 5 um den sich um eine horizontale Rotationsachse 9 mit einer Drehrichtung 10 drehenden Erntegutballen 11 herumgeführt, wobei die Folie von der Folienrolle 7 abgezogen und um den Erntegutballen 11 gewickelt wird. Der Antrieb des Ballens 11 und der Antrieb des Dreharmes 4 arbeiten in einem bestimmten Übersetzungsverhältnis zueinander, so dass sich die um den Ballen 11 gewickelten Folienlagen durch das gleichzeitige Drehen von Dreharm 4 und Ballen 11 überlappen.

Das in Figur 1 dargestellte, bekannte Antriebssystem des Dreharmes 4 besteht aus einem Hydromotor 12, z. B. einen sogenannten Planetenrollermotor, einer Lamellenbremse 13, einer Dreharmlagerung 14 im Tragrahmen 6 und einem Kettentrieb 15 zwischen Dreharmlagerachse 5 und Ausgangswelle der Lamellenbremse 13. Kettentrieb 15, Lamellenbremse 13 und Hydromotor 12 sind übereinander und exzentrisch zur Drehachse 5 des Dreharmes 4 angeordnet. Der Hydromotor 12 ragt weit nach oben über den Tragrahmen 6 hinaus.

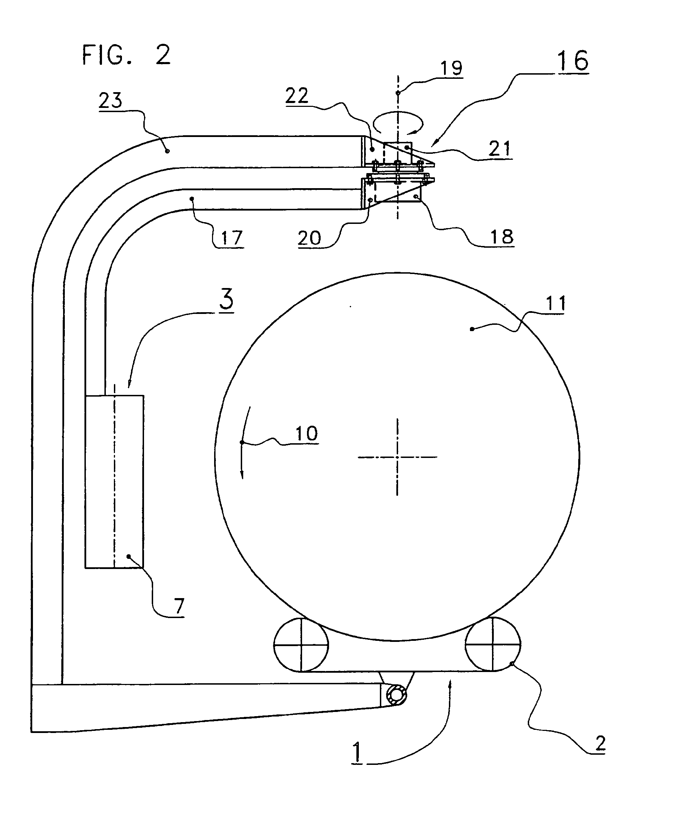

Die Figur 2 der Zeichnung zeigt eine Ausführungsform des neuen Antriebes 16 des Dreharmes 17 mit einem Planetengetriebe 18, das koaxial zur Drehachse 19 des Dreharmes 17 und räumlich zwischen Dreharmober- und -unterseite angeordnet und mittels einer Anbaukonsole 20 als Dreharmbaugruppe am Dreharm 17 befestigt ist. Ein Hydromotor 21 ist auf das Planetengetriebe 18 aufgesetzt und mittels einer Anbaukonsole 22 als Rahmenbaugruppe am Tragrahmen 23 befestigt. Die gesamte Baueinheit, bestehend aus Hydromotor 21 und Planetengetriebe 18, ist damit zwischen Tragrahmenoberseite und Dreharmunterseite angeordnet. Das Untersetzungsverhältnis des Planetengetriebes 18 beträgt im gezeigten Beispiel i = 6 : 1, es kann aber auch höher oder niedriger sein.

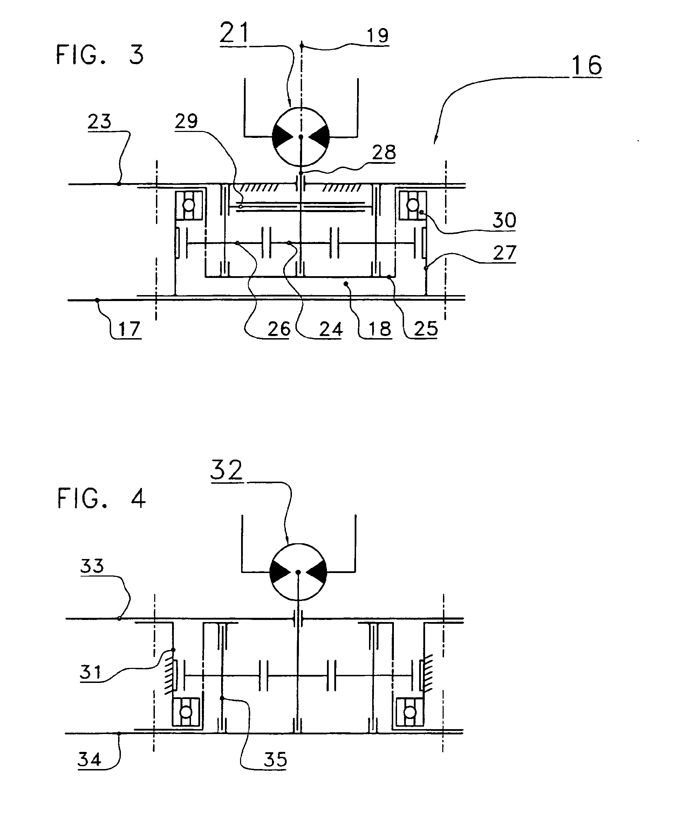

In Figur 3 wird nun ein Beispiel für den erfindungsgemäßen, in Figur 2 nicht näher gezeigten Antrieb 16 für den Dreharm 17 dargestellt. Es handelt sich um ein einstufiges Planetengetriebe 18 mit einem Sonnenrad 24, wenigstens einem in einem Steg 25 gelagerten Planetenrad 26 und einem innen verzahnten Hohlrad 27. Die Antriebswelle 28 des am Tragrahmen 23 ortsfest und koaxial zur Drehachse 19 des Dreharmes 17 angeordneten Hydromotors 21 ist drehfest mit dem Sonnenrad 24 verbunden, das in Eingriff steht mit mehreren, beispielsweise drei Planetenrädern 26. Die Planetenräder 26 sind drehbar im Steg 25 oder Planetenträger gelagert. Der Steg 25 oder Planetenträger ist fest mit dem Hydromotor 21, d. h. auch mit dem Tragrahmen 23 verbunden und bildet das Festglied des Planetengetriebes 18. Neben dem Sonnenrad 24 befinden sich die Planetenräder 26 auch im Eingriff mit dem drehbar gelagerten Hohlrad 27, an dem der Dreharm 17 befestigt ist. Zwischen ortsfestem Steg 25 und Antriebswelle 28 des Sonnenrades 24 ist eine an sich bekannte Lamellenbremse 29 angeordnet, deren Bremswirkung durch Federdruck bewirkt wird, während die Öffnung über den von außen zugeführten Öldruck erfolgt. Sie dient z. B. dazu, um den Dreharm 17 bei Nichtbetrieb in einer bestimmten Grundstellung zu halten. Da die Lamellenbremse 29 koaxial zur Drehachse 19 des Sonnenrades 24 in dem Planetengetriebe 18 angeordnet ist, bleibt die Bauhöhe trotz integrierter Lamellenbremse 29 niedrig. Die Lagerung des Dreharmes 17 erfolgt durch koaxial zur Antriebswelle 28 zwischen drehendem Hohlrad 27 und feststehendem Steg 25 angeordnete Wälzlager 30.

Die Figur 4 der Zeichnung unterscheidet sich von dem in Figur 3 dargestellten Beispiel dadurch, dass das Hohlrad 31 das fest mit dem Hydromotor 32 und dem Tragrahmen 33 verbundene Festglied bildet während der Abtrieb über den drehbar gelagerten, fest mit dem Dreharm 34 verbundenen Steg 35 erfolgt. Außerdem ist keine Lamellenbremse vorgesehen.

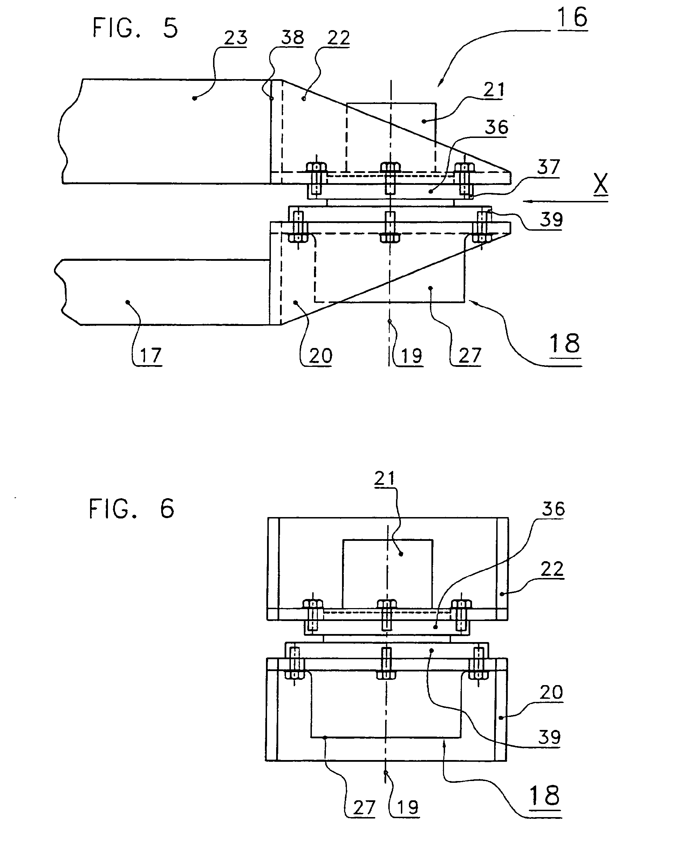

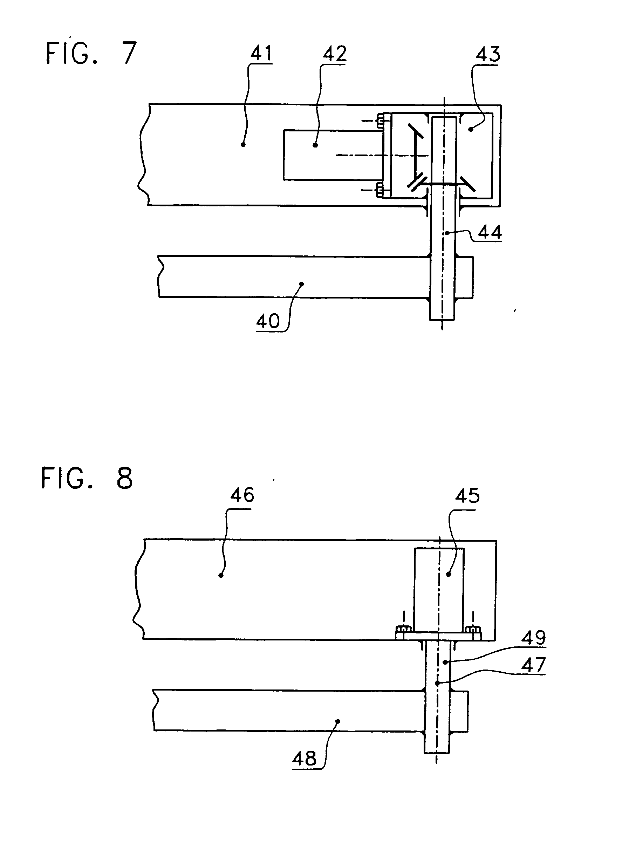

Der Einbau des Antriebes 16 gemäß Fig. 2 und 3 ist am besten aus den Figuren 5 und 6 ersichtlich. Der Hydromotor 21 ist direkt auf das Gehäuse 36 des Planetengetriebes 18 aufgesetzt und bildet mit diesem eine Baueinheit, die drehfest mit dem Tragrahmen 23 verbunden ist. Das Getriebegehäuse 36 des Planetengetriebes 18 gemäß Figur 3 weist einen Ringflansch 37 auf, der mit der Anbaukonsole 22 fest verschraubt ist. Die Anbaukonsole 22 ist an das Tragrohrende 38 des Tragrahmens 23 angeschweißt. Der Dreharm 17 ist ebenfalls aus Rohr und trägt eine spiegelbildlich angeordnete Anbaukonsole 20. Die Anbaukonsole 20 ist fest mit einem Ringflansch 39 des Hohlrades 27 verschraubt. Bei der Montage wird die Baueinheit zunächst mit dem Rahmen 23 verschraubt. Dann wird der Dreharm 17 mit dem Hohlrad 27 verschraubt, so dass der Dreharm 17 mit dem Hohlrad 27 um die vertikale Drehachse 19 drehbar ist. Der Einbau des Antriebes des Dreharmes 34 gemäß Figur 4 erfolgt in ähnlicher Weise, jedoch ist die untere Anbaukonsole nicht spiegelbildlich zur oberen Anbaukonsole, sondern genauso wie die obere Anbaukonsole am Dreharm 34 befestigt.

## Patentansprüche

1. Ballenwickelgerät, bestehend aus einem Wickeltisch (1), auf welchem ein Ballen (11) um eine horizontale Achse (9) drehbar ist und einem Tragrahmen (6), welcher wenigstens einen um eine vertikale Achse (5) mittels eines Drehantriebes (12) drehbaren Dreharm (4) trägt, wobei der Drehantrieb (18, 21, 29, 32) zwischen Oberseite des Tragrahmens (23) und Unterseite des Dreharmes (17) angeordnet ist und einen im Tragrahmen (23) angeordneten Drehmotor (21) aufweist, dessen Abtriebswelle (28) mit dem Dreharm (17) verbunden ist, **dadurch gekennzeichnet, dass** dem Drehmotor (21) ein im Dreharm (17) angeordnetes ein- oder mehrstufiges Planetengetriebe (18, 31, 35) nachgeschaltet ist, bestehend aus einem direkt oder indirekt mit der Abtriebswelle des Drehmotors (21, 32) drehfest verbundenen, eingangsseitigen Sonnenrad (24), einem oder mehreren in einem Steg (25, 35) gelagerten Planetenrädern (26) und einem Hohlrad (27, 31).

2. Ballenwickelgerät nach Anspruch 1, **dadurch gekennzeichnet, dass** der Steg (25) das fest mit dem Tragrahmen (23) verbundene Festglied bildet, während das Hohlrad (27) an dem Dreharm (17) befestigt ist und als Abtrieb dient.

3. Ballenwickelgerät nach Anspruch 1, **dadurch gekennzeichnet, dass** das Hohlrad (31) das fest mit dem Tragrahmen (33) verbundene Festglied bildet und der Abtrieb über den am Dreharm (34) befestigten Steg (35) erfolgt.

4. Ballenwickelgerät nach einem der Ansprüche 1 bis 3, **dadurch gekennzeichnet, dass** die Drehachse (19) des Sonnenrades (24) koaxial zur Drehachse (19) des Dreharmes (17) angeordnet ist.

5. Ballenwickelgerät nach einem oder mehreren der vorhergehenden Ansprüche,
**dadurch gekennzeichnet, dass** dem Drehmotor (21) und/oder dem Planetengetriebe (18) ein oder mehrere Bremselemente (29) zugeordnet sind zum Anhalten und/oder Halten des Dreharmes (17) in vorbestimmten Positionen.

6. Ballenwickelgerät nach einem oder mehreren der vorhergehenden Ansprüche, **dadurch gekennzeichnet, dass** der Drehmotor (21, 32) und das Planetengetriebe (18, 31) als Baueinheit ausgebildet sind.

7. Ballenwickelgerät nach einem oder mehreren der vorhergehenden Ansprüche, **dadurch gekennzeichnet, dass** der Drehmotor (21) ein Hydro- oder Elektromotor ist.

## Claims

1. Bale-wrapping apparatus, consisting of a wrapping table (1), on which a bale (11) can be rotated about a horizontal axis (9), and of a supporting frame (6) that supports at least one rotary arm (4) which can be rotated about a vertical axis (5) by means of a rotary drive (12), wherein the rotary drive (18, 21, 29, 32) is arranged between the upper side of the supporting frame (23) and the lower side of the rotary arm (17) and has a rotary motor (21) that is arranged in the supporting frame (23) and whose driven shaft (28) is connected to the rotary arm (17), **characterised in that** connected downstream of the rotary motor (21) there is a single-stage or multi-stage planetary gear unit (18, 31, 35) arranged in the rotary arm (17) and consisting of an input-side sun wheel (24) directly or indirectly connected to the driven shaft of the rotary motor (21, 32) in a rotationally fixed manner, one or more planet wheels (26) mounted in a cross-piece (25, 35), and a hollow wheel (27, 31).

2. Bale-wrapping apparatus according to claim 1, **characterised in that** the cross-piece (25) forms the fixed member that is fixedly connected to the supporting frame (23), whilst the hollow wheel (27) is secured to the rotary arm (17) and serves as an output.

3. Bale-wrapping apparatus according to claim 1, **characterised in that** the hollow wheel (31) forms the fixed member that is fixedly connected to the supporting frame (33), and the output occurs by way of the cross-piece (35) that is secured to the rotary arm (34).

4. Bale-wrapping apparatus according to one of claims 1 to 3, **characterised in that** the rotational axis (19) of the sun wheel (24) is arranged coaxially with respect to the rotational axis (19) of the rotary arm (17).

5. Bale-wrapping apparatus according to one or more of the preceding claims, **characterised in that** associated with the rotary motor (21) and/or the planetary gear unit (18) there is/are one or more braking elements (29) for stopping and/or holding the rotary arm (17) in predetermined positions.

6. Bale-wrapping apparatus according to one or more of the preceding claims, **characterised in that** the rotary motor (21, 32) and the planetary gear unit (18, 31) are formed as a structural unit.

7. Bale-wrapping apparatus according to one or more of the preceding claims, **characterised in that** the rotary motor (21) is a hydraulic or electric motor.

## Revendications

1. Enrouleuse de balles, composée d'une table d'enroulement (1) sur laquelle une balle peut être tournée autour d'un axe horizontal (9) et d'un cadre porteur (6) lequel supporte au moins un bras de rotation (4) tournant autour d'un axe vertical (5) à l'aide d'un entraînement rotatif (12), l'entraînement rotatif (18, 21, 29, 32) étant disposé entre la partie supérieure du cadre porteur (23) et la partie inférieure du bras de rotation (17) et présentant un moteur couple (21) monté dans le cadre porteur (23) et dont l'arbre de sortie (28) est rattaché au bras de rotation (17), **caractérisée en ce qu'**un engrenage planétaire (18, 31, 35) mono-étagé ou multi-étagé disposé dans le bras de rotation (17) est monté en aval du moteur couple (21), l'engrenage étant composé d'une roue solaire (24) côté entrée qui est rattachée directement ou indirectement à l'arbre de sortie du moteur couple (21, 32) sans pouvoir être pivotée, d'une ou plusieurs roues planétaires (26) logée(s) dans une nervure (25, 35) et d'une roue à denture intérieure (27, 31).

2. Enrouleuse de balles selon la revendication 1, **caractérisée en ce que** la nervure (25) forme l'élément fixe rattaché au cadre porteur (23), alors que la roue à denture intérieure (27) est fixée au bras de rotation (17) et sert d'entraînement.

3. Enrouleuse de balles selon la revendication 1, **caractérisée en ce que** la roue à denture intérieure (31) forme l'élément fixe rattaché au cadre porteur (33) et **en ce que** l'entraînement s'effectue par l'intermédiaire de la nervure (35) fixée au bras de rotation (34).

4. Enrouleuse de balles selon l'une des revendications 1 à 3, **caractérisée en ce que** l'axe de rotation (19) de la roue solaire (24) est disposé coaxialement à l'axe de rotation (19) du bras de rotation (17).

5. Enrouleuse de balles selon l'une quelconque ou plusieurs des revendications précédentes, **caractérisée en ce qu'**un ou plusieurs élément(s) de freinage (29) sont affectés au moteur couple (21) et/ou à l'engrenage planétaire (18) pour arrêter et/ou maintenir le bras de rotation (17) dans des positions prédéterminées.

6. Enrouleuse de balles selon l'une quelconque ou plusieurs des revendications précédentes, **caractérisée en ce que** le moteur couple (21, 32) et l'engrenage planétaire (18, 31) sont conçus sous forme d'unité modulaire.

7. Enrouleuse de balles selon l'une quelconque ou plusieurs des revendications précédentes, **caractérisée en ce que** le moteur couple (21) est un moteur hydraulique ou électrique.
